# EUROPEAN PATENT APPLICATION

(11) **EP 3 974 999 A1**
(43) Date of publication of application: **30.03.2022**
(21) Application number: 21190506.2
(22) Date of filing: 10.08.2021
(51) Int. Cl.: G06F 15/02

(54) **ELECTRONIC APPARATUS, DISPLAY CONTROL METHOD, AND DISPLAY CONTROL PROGRAM**

(30) Priority: 23.09.2020 JP 2020159060
(71) Applicant: Casio Computer Co., Ltd., Tokyo 151-8543 (JP)
(72) Inventor: YOSHIZAWA, Hiroaki, Tokyo, 205-8555 (JP)
(74) Representative: Plougmann Vingtoft a/s

(57) **Abstract**

An electronic apparatus includes a display and at least one processor for executing a program stored in a storage. The at least one processor displays a calculation result of an executed calculation. In a case where the calculation result includes a plurality of numerical values that are related to each other, the at least one processor displays the plurality of numerical values on the display in such a manner as to be able to switch between each numerical value.

## Description

### FIELD

The present invention relates to an electronic apparatus, a display control method, and a display control program.

### BACKGROUND

In general, the number of digits of a numerical value that can be displayed on a display of an electronic calculator (hereinafter referred to as a "calculator") is limited.

Jpn. Pat. Appln. KOKAI Publication No. 2001-188762 proposes a technique for allowing a plurality of input values or calculation results to be displayed in parallel by dividing a display region into a plurality of rows. However, this may not only increase the size of the display, but may also pose a problem of limited display capacity.

### SUMMARY

An electronic apparatus according to a first aspect comprises a display and at least one processor for executing a program stored in a storage. The at least one processor displays a calculation result of an executed calculation. In a case where the calculation result includes a plurality of numerical values that are related to each other, the at least one processor displays the plurality of numerical values on the display in such a manner as to be able to switch between each numerical value.

A display control method of an electronic apparatus comprising a display, the display control method comprises displaying a calculation result of an executed calculation, and in a case where a calculation result includes a plurality of numerical values that are related to each other, displaying on the display the plurality of numerical values in such a manner as to be able to switch between each numerical value.

A display control program according to a third aspect is executable by at least one processor of an electronic apparatus comprising a display. The display control program causes the at least one processor to display a calculation result of an executed calculation and in a case where a calculation result includes a plurality of numerical values that are related to each other, display on the display the plurality of numerical values in such a manner as to be able to switch between each numerical value.

### BRIEF DESCRIPTION OF THE DRAWINGS

FIG. 1 is a front view showing an exterior configuration of a specialty calculator according to a first embodiment of the present invention.
FIG. 2 is a block diagram showing a function circuit configuration according to the embodiment.
FIG. 3 is a diagram exemplifying a part of a key operation of a process in a case of calculating an amount of a powdered medicine package and a display corresponding thereto according to the embodiment.
FIG. 4 is a flowchart showing processing details in the process of calculating the amount of the powdered medicine package according to the embodiment.
FIG. 5 is a drawing showing other display examples of a display according to the embodiment.

### DETAILED DESCRIPTION

Hereinafter, an embodiment in the case of applying the present invention to a calculator for professional technical calculation (hereinafter referred to as a "specialty calculator") used by medical practitioners will be described in detail with reference to the drawings.

### [Configuration]

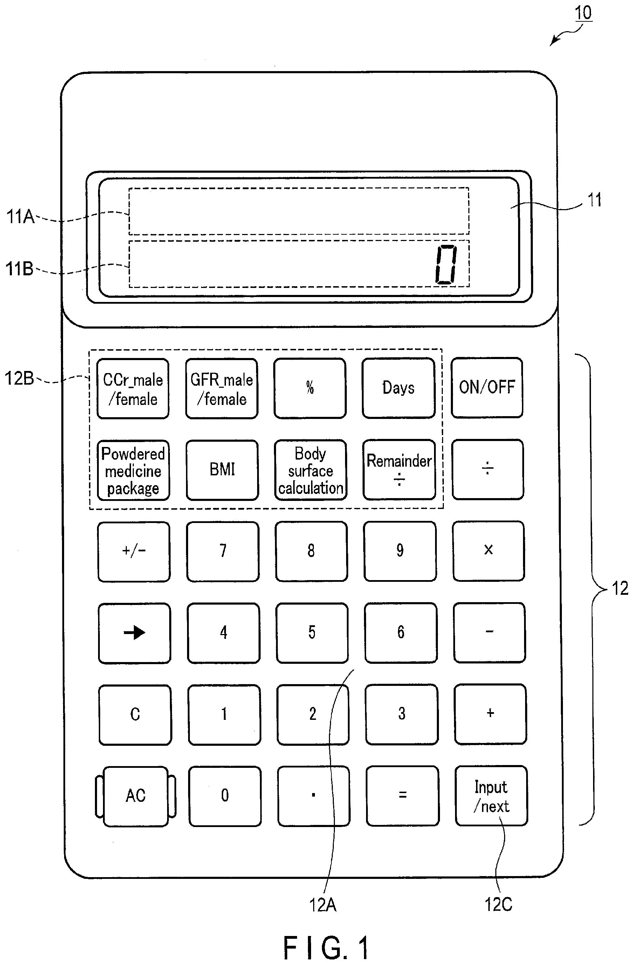

FIG. 1 is a front view showing an exterior configuration of a specialty calculator 10 according to the present embodiment. The specialty calculator 10 is provided with a display 11 and a key input unit 12 on the front of the main body.

The display 11 is configured by, for example, a monochrome reflective liquid crystal display panel, and includes a dot matrix display 11A in an upper row and a 7 segment display 11B in a lower row. The 7 segment display 11B includes, for example, ten digits of 7 segments and segments of decimal points, and displays an input numerical value and a numerical value of a calculation result, etc.

The key input unit 12 is provided with a numeral and operation key group 12A for inputting numerical values and formulas for basic calculations including addition, subtraction, multiplication, and division, or for instructing execution of calculations. The key input unit 12 is also provided with a medical calculation key group 12B for designating a formula of a medical calculation. The key input unit 12 is provided with an input/next key 12C for inputting numerical values of variables in the designated formula, and instructing shifting to the next calculation process.

The numeral and operator key group 12A includes "0" to "9" (numerical value) keys, "+", "-", "×", "÷" (four arithmetic operation symbol) keys, a "+/-" (positive/negative inversion) key, a "-" key, a "C" (clear) key, an "AC" (all clear) key, an "=" (execution) key, etc.

The medical calculation key group 12B includes a "CCrmale/female" key for calculating CCr (creatinine clearance (clearance of creatinine in a blood serum (ability of the kidney to excrete body wastes)) in a renal function calculation, a "GFR_male/female" key for calculating eGFR (estimated glomeruler filtration rate) in the renal function calculation as well, a "%" key for converting the numerical value of the calculated result into a percentage (%), a "days" key for calculating the number of lapsed days of a disease, etc., a "powdered medicine package" key for calculating the number of packages, etc. in a powdered medicine inspection calculation, a "BMI" key for calculating BMI (body mass index) and a standard weight, a "body surface calculation" key for calculating, for example, a body surface area based on a Fujimoto formula or a Du Bois formula, and a "remainder ÷" key for calculating an ingredient amount and a measuring weight in a titer calculation.

As for the "CCr_male/female" key and the "GFR_male/female" key, the CCr formula and the GFR formula are different for male and female. Therefore, after the calculation is designated by these keys, primarily, a key operation for selecting male/female should subsequently be performed. In the operation of the present embodiment described later, for the sake of simplicity, illustrations and explanations on the key operation of selecting gender will be omitted.

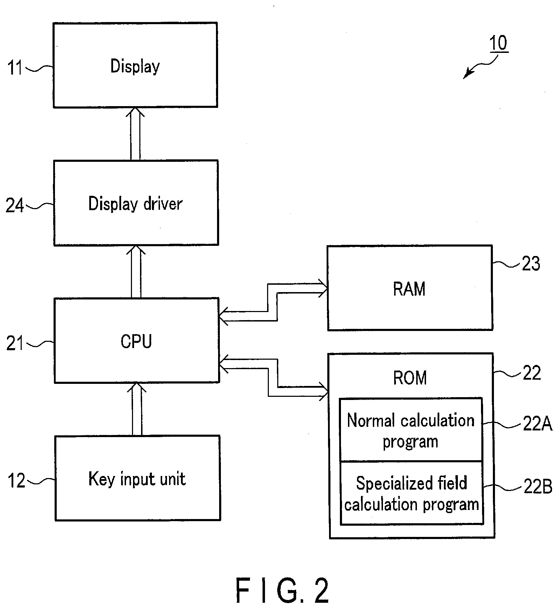

FIG. 2 is a block diagram showing a functional configuration of an electronic circuit of a specialty calculator 10.

The electronic circuit of this specialty calculator 10 includes a CPU 21, which is a processor. The CPU 21 is connected to a ROM 22, a RAM 23, a display driver 24, and a key input unit 12. The display driver 24 is connected to the display 11.

The key input unit 12 outputs a key operation signal to the CPU 21 in accordance with the various key operations mentioned above.

The ROM 22 is configured by, for example, a flash memory, which is a ROM that is electrically rewritable, and stores various operation programs executed by the CPU 21 and fixed data, etc. The ROM 22 stores a normal calculation program 22A and a specialized field calculation program 22B.

The normal calculation program 22A is a program for executing a normal numerical calculation using the numeral and operation key group 12A.

The specialized field calculation program 22B is a program for executing a calculation by a formula corresponding to the key operation performed by the medical calculation key group 12B of the key input unit 12.

The RAM 23 is a working memory that holds various programs and data, etc. read from the ROM 22.

The CPU 21 reads necessary programs and data, etc. as appropriate from the ROM 22 in accordance with the key operation performed by the key input unit 12, develops them on the RAM 23, executes a calculation operation, and outputs display data of each calculation process to the display driver 24.

The display driver 24 drives the display 11 based on the display data provided by the CPU 21 to display each calculation process of the normal calculation and the specialized field calculation.

### [Operation]

Operations of the present embodiment will now be described.

The following are details of operations in which the CPU 21 read to execute the specialized field calculation program 22B stored in the ROM 22.

It should be noted that a part of the calculation is executed primarily by a formula that is based on each selected gender of male or female. However, in the present operation example, for simplicity, the description of the key operation, etc. for selecting a gender will be omitted.

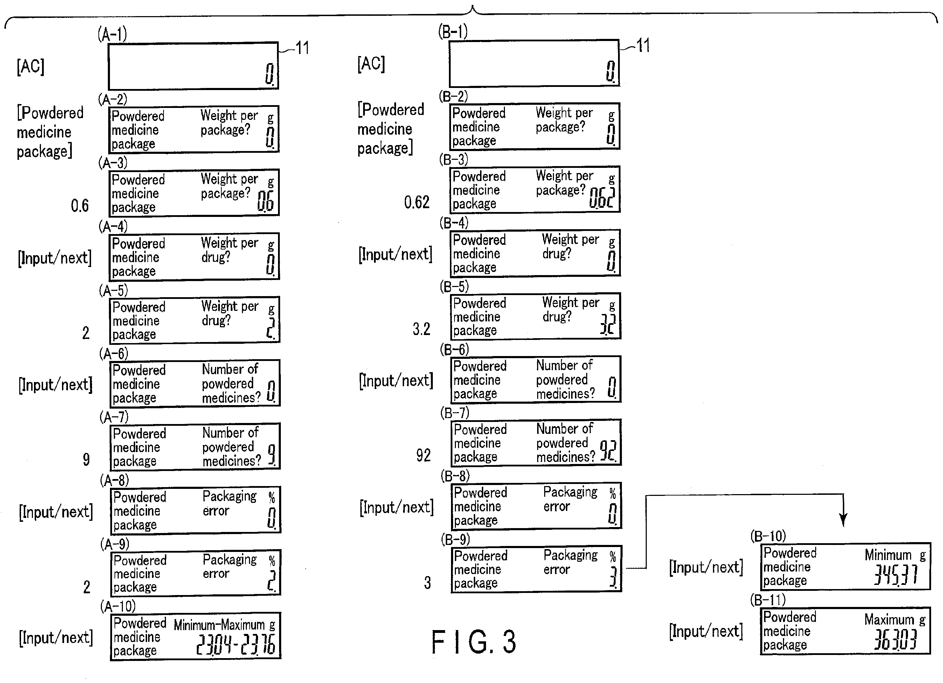

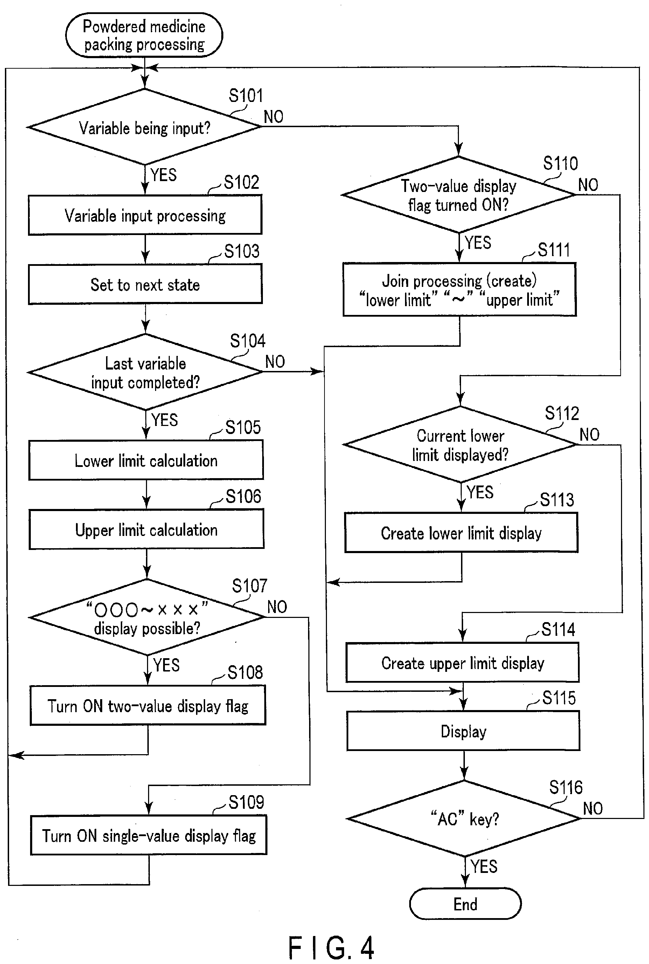

FIG. 3 is a diagram exemplifying a part of a key operation of a process in a case of calculating the amount of a powdered medicine package and a display corresponding thereto. FIG. 4 is a flowchart showing processing details in the process of calculating the amount of the powdered medicine package.

When the "AC" key of the numeral and operator key group 12A and the "powdered medicine package" key of the medical calculation key group 12B of the key input unit 12 are operated in succession, the processing of the specialized field calculation shown in FIG. 4 is started. All of the processing details shown in FIG. 4 are executed after the CPU 21 reads the specialized field calculation program 22B of the ROM 22 and develops to store it on the RAM 23.

Incidentally, the powdered medicine package is described in the specialized field calculation program 22B as being calculate by the following formula:
("weight per drug (one dosage) [g]" * "number of powdered medicines") * (100 ± packaging error [%]) / 100 + (weight per package (blank weight) [g] * "number of powdered medicines").

By inputting numerical values corresponding to each of the weight per package, the weight per drug, the number of powdered medicines, and the packaging error as variables, the calculation is executed.

In (A-1) of FIG. 3, when the "AC" key is operated as the key operation, the display 11 is reset, and "0 (zero)" is displayed on the 7 segment display 11B.

Subsequently, in (A-2) of FIG. 3, when the "powdered medicine package" key is operated, the CPU 21 reads a corresponding formula of the powdered medicine package from the specialized field calculation program 22B, starts the processing in FIG. 4 and displays "powdered medicine package, weight per package ? g" on the dot matrix display 11A of the display 11. Furthermore, the CPU 21 continues displaying on the 7 segment display 11B a state "0 (zero)", in which a numerical value corresponding to the variable is yet to be input.

In FIG. 4, the CPU 21 determines whether or not the variable is in the process of being input to the formula (step S101).

In (A-3) of FIG. 3, when the key input unit 12 is operated in accordance with the display on the display 11, and a numerical value "0.6" is input with respect to the variable of weight per package, the 7 segment display 11B displays the input numerical value "0.6".

In (A-4) of FIG. 3, when the input/next key 12C is operated, the CPU 21 determines that the key has been operated in step S101 and the variable has been input (step S101, YES), and executes processing for inputting the numerical value "0.6" input at that point as the variable of weight per package (step S102).

After executing the input processing of the variable, at that point, the CPU 21 sets the processing to shift to inputting the next variable of the formula (step S103). Subsequently, the CPU 21 determines whether the last variable input has been completed by determining whether there is a variable for which a numerical value is yet to be input (step S104).

In the case where the CPU 21 determines that there is a variable for which a numerical value is yet to be input, this means that the last variable input is not completed (step S104, NO), and the CPU 21 executes a guide display to encourage the next input (step S115). Subsequently, after confirming that there is no operation of the "AC" key to clear the entire state (step S116, NO), the CPU 21 returns to the processing of step S101 to prepare for the numerical value input and the input/next key 12C to be operated.

In (A-4) of FIG. 3, in accordance with the operation of the input/next key 12C, the dot matrix display 11A displays "powdered medicine package, weight per drug ? g" for the next variable input, and the 7 segment display 11B displays "0 (zero)", indicating a state in which a numerical value corresponding to the variable is yet to be input on the display 11.

In (A-5) of FIG. 3, when the key input unit 12 is operated in accordance with the display on the display 11, and a numerical value "2" is input with respect to the variable of weight per drug, the 7 segment display 11B displays the input numerical value "2".

In (A-6) of FIG. 3, when the input/next key 12C is operated, the CPU 21 determines that the key has been operated in step S101 and the variable has been input (step S101, YES), and executes processing for inputting the numerical value "2" input at that point as the variable of weight per drug (step S102).

After executing the input processing of the variable, at that point, the CPU 21 sets the processing to shift to inputting the next variable of the formula (step S103). In the case where the CPU 21 determines that there is yet a variable for which a numerical value is to be input, this means that the last variable input is not completed (step S104, NO), and the CPU 21 executes a guide display to encourage the next input (step S115). Subsequently, after confirming that there is no operation of the "AC" key to clear the entire state (step S116, NO), the CPU 21 returns to the processing of step S101 to prepare for the numerical value input and the input/next key 12C to be operated.

In (A-6) of FIG. 3, in accordance with the operation of the input/next key 12C, the dot matrix display 11A displays "powdered medicine package, number of powdered medicines ?" for the next variable input, and the 7 segment display 11B displays "0 (zero)", indicating a state in which a numerical value corresponding to the variable is yet to be input on the display 11.

In (A-7) of FIG. 3, when the key input unit 12 is operated in accordance with the display on the display 11, and a numerical value "9" is input with respect to the variable of the number of powdered medicines, the 7 segment display 11B displays the input numerical value "9".

In (A-8) of FIG. 3, when the input/next key 12C is operated, the CPU 21 determines that the key has been operated in step S101 and the variable has been input (step S101, YES), and executes processing for inputting the numerical value "9" input at that point as the variable of the number of powdered medicines (step S102).

After executing the input processing of the variable, at that point, the CPU 21 sets the processing to shift to inputting the next variable of the formula (step S103). In the case where the CPU 21 determines that there is yet a variable for which a numerical value is to be input, this means that the last variable input is not completed (step S104, NO), and the CPU 21 executes a guide display to encourage the next input (step S115). Subsequently, after confirming that there is no operation of the "AC" key to clear the entire state (step S116, NO), the CPU 21 returns to the processing of step S101 to prepare for the numerical value input and the input/next key 12C to be operated.

In (A-8) of FIG. 3, in accordance with the operation of the input/next key 12C, the dot matrix display 11A displays "powdered medicine package, packaging error %" for the next variable input, and the 7 segment display 11B displays "0 (zero)", indicating a state in which a numerical value corresponding to the variable is yet to be input on the display 11.

In (A-9) of FIG. 3, when the key input unit 12 is operated in accordance with the display on the display 11, and a numerical value "2" is input with respect to the variable of the packaging error, the 7 segment display 11B displays the input numerical value "2".

In (A-10) of FIG. 3, when the input/next key 12C is operated, the CPU 21 determines that the key has been operated in step S101 and the variable has been input (step S101, YES), and executes processing for inputting the numerical value "2" input at that point as the variable of the packaging error (step S102).

After executing the input processing of the variable, at that point, the CPU 21 sets the processing to shift to inputting the next variable of the formula (step S103). When numerical values of all of the variables are input, and it is determined that the last variable input is completed (step S104, YES), the CPU 21 sequentially calculates a lower limit and an upper limit based on the formula of the powdered medicine package described earlier, on the basis of the numerical value of each of the variables input up to this point (steps S105, S106).

Subsequently, based on each digit of the calculated numerical values of the lower limit and the upper limit, the CPU 21 determines whether the 7 segment display 11B of the display 11 is able to display the lower limit and the upper limit simultaneously within one line (within ten digits) (step S107).

In the case where it is determined that the 7 segment display 11B is able to display the lower limit and the upper limit simultaneously within one line (step S107, YES), the CPU 21 sets a two-value display flag for displaying two values simultaneously on the 7 segment display 11B to ON (step S108).

Furthermore, in step S107, in the case where it is determined that the 7 segment display 11B is unable to display the lower limit and the upper limit simultaneously within one line (step S107, NO), the CPU 21 sets a single-value display flag for displaying single values obtained by dividing the two values respectively on the 7 segment display 11B to ON (step S109).

After executing the flag setting processing in step S108 or step S109, the CPU 21 returns to the processing of step S101.

In the case of determining that the process of inputting variables for calculating the powdered medicine package is ended in step S101 (step S101, NO), the CPU 21 determines whether the two-value display flag is turned ON (step S110).

When it is determined that the two-value display flag is turned ON (step S110, YES), to display the calculation result of the powdered medicine package in the form of "lower limit ~ upper limit" on the display 11, the CPU 21 creates display data by executing join processing to consolidate the calculation result in one line (step S111). The CPU 21 then displays the created contents on the 7 segment display 11B of the display 11 (step S115).

In (A-10) of FIG. 3, in accordance with the operation of the input/next key 12C, the dot matrix display 11A displays "powdered medicine package, minimum - maximum g" as the calculation result of the powdered medicine package, and the 7 segment display 11B displays the calculation result "23.04 - 23.76" in one line in a consolidated manner on the display 11.

Hereinafter, the CPU 21 repeats the processing of steps S101, S110, S111, S115, and S116 until the "AC" key of the key input unit 12 is operated and a key operation to clear the entire state is performed (step S116, YES). Therefore, the display state of the display 11 is maintained.

Here, as for the operation of the input/next key 12C, the CPU 21 does not execute additional processing in particular as a NOP (no operation) instruction. At the time of determining that the "AC" key is being operated (step S116, YES), the CPU 21 ends the processing in FIG. 4.

As described above, (A-1) to (A-10) of FIG. 3 show an example of a case in which the calculation result of the powdered medicine package can be displayed in one line on the 7 segment display 11B of the display 11.

Now, a case in which the calculation result of the powdered medicine package cannot be displayed in one line on the 7 segment display 11B of the display 11 will be described by (B-1) to (B-11) of FIG. 3.

In (B-1) of FIG. 3, when the "AC" key is operated as the key operation, the display 11 is reset, and "0 (zero)" is displayed on the 7 segment display 11B.

Subsequently, in (B-2) of FIG. 3, when the "powdered medicine package" key is operated, the CPU 21 reads a corresponding formula of the powdered medicine package from the specialized field calculation program 22B, and starts the processing in FIG. 4. Here, on the display 11, the dot matrix display 11A displays "powdered medicine package, weight per package ? g", and the 7 segment display 11B continues displaying "0 (zero)", indicating a state where a numerical value corresponding to the variable is yet to be input.

In FIG. 4, the CPU 21 determines whether or not the variable is in the process of being input to the formula (step S101).

In (B-3) of FIG. 3, when the key input unit 12 is operated in accordance with the display on the display 11, and a numerical value "0.62" is input with respect to the variable of weight per package, the 7 segment display 11B displays the input numerical value "0.62".

In (B-4) of FIG. 3, when the input/next key 12C is operated, the CPU 21 determines that the key has been operated in step S101 and the variable has been input (step S101, YES), and executes processing for inputting the numerical value "0.62" input at that point as the variable of weight per package (step S102).

After executing the input processing of the variable, at that point, the CPU 21 sets the processing to shift to inputting the next variable of the formula (step S103). The CPU 21 then determines whether the last variable input has been completed by determining whether there is a variable for which a numerical value is yet to be input (step S104).

In the case where the CPU 21 determines that there is a variable for which a numerical value is yet to be input, this means that the last variable input is not completed (step S104, NO), and the CPU 21 executes a guide display to encourage the next input (step S115). Subsequently, after confirming that there is no operation of the "AC" key to clear the entire state (step S116, NO), the CPU 21 returns to the processing of step S101 to prepare for the numerical value input and the input/next key 12C to be operated.

In (B-4) of FIG. 3, in accordance with the operation of the input/next key 12C, the dot matrix display 11A displays "powdered medicine package, weight per drug ? g" for the next variable input, and the 7 segment display 11B displays "0 (zero)", which indicates a state in which a numerical value corresponding to the variable is yet to be input on the display 11.

In (B-5) of FIG. 3, when the key input unit 12 is operated in accordance with the display on the display 11, and a numerical value "3.2" is input with respect to the variable of weight per drug, the 7 segment display 11B displays the input numerical value "3.2".

In (B-6) of FIG. 3, when the input/next key 12C is operated, the CPU 21 determines that the key has been operated in step S101 and the variable has been input (step S101, YES), and executes processing for inputting the numerical value "3.2" input at that point as the variable of weight per drug (step S102).

After executing the input processing of the variable, at that point, the CPU 21 sets the processing to shift to inputting the next variable of the formula (step S103). In the case where the CPU 21 determines that there is yet a variable for which a numerical value is to be input, this means that the last variable input is not completed (step S104, NO), and the CPU 21 executes a guide display to encourage the next input (step S115). Subsequently, after confirming that there is no operation of the "AC" key to clear the entire state (step S116, NO), the CPU 21 returns to the processing of step S101 to prepare for the numerical value input and the input/next key 12C to be operated.

In (B-6) of FIG. 3, in accordance with the operation of the input/next key 12C, the dot matrix display 11A displays "powdered medicine package, number of powdered medicines ?" for the next variable input, and the 7 segment display 11B displays "0 (zero)", which indicates a state in which a numerical value corresponding to the variable is yet to be input on the display 11.

In (B-7) of FIG. 3, when the key input unit 12 is operated in accordance with the display on the display 11, and a numerical value "92" is input with respect to the variable of the number of powdered medicines, the 7 segment display 11B displays the input numerical value "92".

In (B-8) of FIG. 3, when the input/next key 12C is operated, the CPU 21 determines that the key has been operated in step S101 and the variable has been input (step S101, YES), and executes processing for inputting the numerical value "92" input at that point as the variable of the number of powdered medicines (step S102).

After executing the input processing of the variable, at that point, the CPU 21 sets the processing to shift to inputting the next variable of the formula (step S103). In the case where the CPU 21 determines that there is yet a variable for which a numerical value is to be input, this means that the last variable input is not completed (step S104, NO), and the CPU 21 executes a guide display to encourage the next input (step S115). Subsequently, after confirming that there is no operation of the "AC" key to clear the entire state (step S116, NO), the CPU 21 returns to the processing of step S101 to prepare for the numerical value input and the input/next key 12C to be operated.

In (B-8) of FIG. 3, in accordance with the operation of the input/next key 12C, the dot matrix display 11A displays "powdered medicine package, packaging error %" for the next variable input, and the 7 segment display 11B displays "0 (zero)", indicating a state in which a numerical value corresponding to the variable is yet to be input on the display 11.

In (B-9) of FIG. 3, when the key input unit 12 is operated in accordance with the display on the display 11, and a numerical value "3" is input with respect to the variable of the packaging error, the 7 segment display 11B displays the input numerical value "3".

In (B-10) of FIG. 3, when the input/next key 12C is operated, the CPU 21 determines that the key has been operated in step S101 and the variable has been input (step S101, YES), and executes processing for inputting the numerical value "3" input at that point as the variable of the packaging error (step S102).

After executing the input processing of the variable, at that point, the CPU 21 sets the processing to shift to inputting the next variable of the formula (step S103). When numerical values of all of the variables are input, and it is determined that the last variable input is completed (step S104, YES), the CPU 21 sequentially calculates a lower limit and an upper limit based on the formula of the powdered medicine package described earlier, on the basis of the numerical value of each of the variables input up to this point (steps S105, S106).

Subsequently, based on each digit of the calculated numerical values of the lower limit and the upper limit, the CPU 21 determines whether the 7 segment display 11B of the display 11 is able to display the lower limit and the upper limit simultaneously within one line (within ten digits) (step S107).

Here, in the case where it is determined that the 7 segment display 11B is unable to display the lower limit and the upper limit simultaneously within one line (step S107, NO), the CPU 21 sets a single-value display flag for displaying single values obtained by dividing the two values respectively on the 7 segment display 11B to ON (step S109). Then, the CPU 21 returns to the processing of step S101.

In the case of determining that the process of inputting variables for calculating the powdered medicine package is ended in step S101 (step S101, NO), the CPU 21 determines whether the two-value display flag is turned ON (step S110).

When it is determined that the single-value display flag is set instead of the two-value display flag (step S110, NO), assuming that the lower limit is set as a default to be displayed first in the present embodiment, the CPU 21 determines whether the current state is in a state for displaying the lower limit (step S112).

When it is determined that the current state is for displaying the lower limit (step S112, YES), the CPU 21 creates display data of the calculation result to display the calculation result of the powdered medicine package of the "lower limit", which is one of the limits, first on the display 11 (step S113). The CPU 21 then displays the created contents on the 7 segment display 11B of the display 11 (step S115).

In (B-10) of FIG. 3, in accordance with the operation of the input/next key 12C, the dot matrix display 11A displays "powdered medicine package, minimum g" for displaying the lower limit of the calculation result, and the 7 segment display 11B displays the calculated numerical value "345.37" on the display 11.

In (B-11) of FIG. 3, when the input/next key 12C is further operated, the CPU 21 determines that the key has been operated other than for the variable input in step S101 (step S101, NO). In this case, the CPU 21 determines that the two-value display flag is not turned ON in step S100, and instead, that the single-value display flag is turned ON (step S110, NO).

Subsequently, in step S112, when it is determined that the lower limit has already been displayed and that the current state is not in a state for displaying the lower limit (step 112, NO), the CPU 21 creates display data of the calculation result to display the calculation result of the powdered medicine package of the "upper limit", which is the other limit, on the display 11 (step S114). The CPU 21 then displays the created contents on the 7 segment display 11B of the display 11 (step S115).

In (B-11) of FIG. 3, in accordance with the operation of the input/next key 12C, the dot matrix display 11A displays "powdered medicine package, maximum g" for switching the calculation result to the upper limit and displaying it, and the 7 segment display 11B displays the calculated numerical value "363.03" on the display 11.

Hereinafter, every time the input/next key 12C is operated, the CPU 21 displays the upper limit and the lower limit to be switched sequentially in circulation, and ends the processing of FIG. 4 at the time the operation of the "AC" key is determined.

Therefore, in the case of dividing and displaying the calculation result of two values, the calculation result can be confirmed not only once but any number of times as needed by, for example, performing display operation in circulation so as to sequentially switch the display contents every time the input/next key 12C is operated in the manner described above.

It should be noted that, in (B-10) and (B-11) of FIG. 3 described above, the display 11 displays the lower limit and the upper limit after the calculation result by the characters "minimum" and "maximum", respectively, along with the numerical values corresponding thereto. This reduces the probability of misconception since the user of the specialty calculator 10 would not need to determine whether the numerical value is an upper limit or a lower limit from the relationship of magnitude thereof between the two values displayed in a switchable manner.

Furthermore, in the present embodiment, instead of what is displayed on the display 11 in (B-10) and (B-11) of FIG. 3, when displaying a plurality of numerical values by dividing them, they may be displayed at different positional relationships together with information in accordance with the relationship between the numerical values and other numerical values.

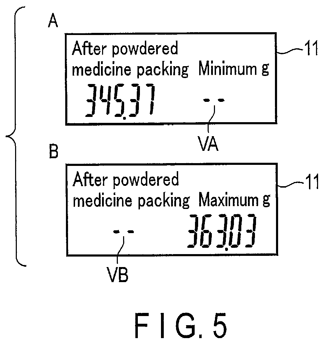

FIG. 5 is a drawing showing other display examples of the display 11 mentioned above.

"A" in FIG. 5 shows the same display contents as those in the dot matrix display 11A shown in (B-10) of FIG. 3. On the other hand, in "A" of FIG. 5, the 7 segment display 11B displays a numerical value "345.37" of the lower limit on the left end side of a 10-digit display region, and displays a symbol "- -" in digits on the right side thereof as information VA related thereto. This indicates that a numerical value related thereto is expressed on the right side (a larger numerical value side).

Similarly, in the case where a numerical value of the upper limit is displayed along with the operation of the input/next key 12C, "B" in FIG. 5 shows the same display contents as those in the dot matrix display 11A shown in (B-11) of FIG. 3. On the other hand, in "B" of FIG. 5, the 7 segment display 11B displays a numerical value "363.03" of the upper limit on the right end side of the 10-digit display region, and displays a symbol "- -" in digits on the left side thereof as information VB related thereto. This indicates that a numerical value related thereto is expressed on the left side (a smaller numerical value side).

Therefore, when dividing a plurality of numerical values and displaying them, by also displaying information of, such as, a symbol in accordance with the relationship between the displayed numerical value and the other non-displayed numerical value at that time, the relationship with the other numerical values may be expressed in a comprehensible manner.

It should be noted that the descriptions above relate to a case in which two related numerical values are both calculated from a calculation based on a formula. However, depending on the set formula, there are also cases in which three or more numerical values that are related to each other are calculated.

In such a case, there is a higher probability that the calculated numerical values may not be able to be displayed at the same time on the display. Therefore, for example, in the case of a relationship such as "lower limit - average value - upper limit", a method of displaying the three values as
"o - - 345.37",
"- o - 354.20", or
"- - o 363.03"
may be considered so that the position of the numerical value displayed at that point is expressed by "o", etc., which would also display the position of the displayed numerical value among the numerical values related to each other.

As described above in detail, according to the present embodiment, in the case of displaying a plurality of numerical values that are related to each other, the display may display the numerical values in a comprehensible form even if the display contents of the display are limited.

It should be noted that although the case of applying the present embodiment to a calculator for professional technical calculation used by medical practitioners has been described, the present invention is not limited to a specialized field or formulas used in the specialized field, etc. Furthermore, the present embodiment may also be realized as an application software to be installed in a portable information terminal in which the capacity of a display screen is limited, such as in some of the feature phone-type smart phones.

The present invention is not limited to the above-described embodiments, and various modifications can be made in the implementation stage without departing from the gist thereof. The respective embodiments may be appropriately combined to the extent possible, in which case a combined effect will be obtained. Furthermore, the above embodiments include various stages of invention, and various inventions can be derived by appropriately combining the disclosed elements. For example, even if some structural elements are deleted from all of the structural elements mentioned in the embodiments, in the case where the problem described in the problem to be solved can be solved and the effect described in the effect of the invention can be achieved, the structure from which the structural elements are deleted can be extracted as an invention.

## Claims

1. An electronic apparatus comprising:
a display; and
at least one processor for executing a program stored in a storage, wherein
the at least one processor displays a calculation result of an executed calculation, and
in a case where the calculation result includes a plurality of numerical values that are related to each other, the at least one processor displays the plurality of numerical values on the display in such a manner as to be able to switch between each numerical value.

2. The electronic apparatus according to claim 1, wherein the at least one processor displays on the display the numerical values along with a display indicating the relationship thereto.

3. The electronic apparatus according to claim 1 or 2, wherein the at least one processor displays each of the numerical values at different display positions on the display.

4. The electronic apparatus according to one of claims 1 to 3, wherein the at least one processor:
determines whether or not the plurality of numerical values can be displayed at a same time on the display; and
in a case of determining that the plurality of numerical values cannot be displayed at the same time on the display, displays the plurality of numerical values on the display in such a manner as to be able to switch between each numerical value.

5. The electronic apparatus according to claim 4, wherein, in a case of determining that the plurality of numerical values can be displayed at the same time on the display, the at least one processor displays the plurality of numerical values at the same time on the display.

6. The electronic apparatus according to claim 4 or 5, wherein, in a case of determining that the plurality of numerical values cannot be displayed at the same time on the display, the at least one processor displays on the display the plurality of numerical values in circulation by switching between each numerical value in accordance with an operation of a specific key.

7. The electronic apparatus according to one of claims 4 to 6, wherein, in a case of determining that the plurality of numerical values cannot be displayed at the same time on the display, the at least one processor displays on the display the plurality of numerical values along with information indicating a relationship thereto in such a manner as to be able to switch between each numerical value.

8. The electronic apparatus according to one of claims 4 to 7, wherein, in a case of determining that the plurality of numerical values cannot be displayed at the same time on the display, the at least one processor displays on the display the plurality of numerical values along with information in accordance with the relationship of the numerical values to other numerical values, in such a manner as to be able to switch between each numerical value.

9. The electronic apparatus according to one of claims 1 to 8, wherein the relationship between the plurality of numerical values indicates a relationship between a maximum value and a minimum value of a calculation result.

10. A display control method of an electronic apparatus comprising a display, the display control method comprising:
displaying a calculation result of an executed calculation; and
in a case where a calculation result includes a plurality of numerical values that are related to each other, displaying on the display the plurality of numerical values in such a manner as to be able to switch between each numerical value.

11. The display control method according to claim 10, further comprising:
determining whether or not the plurality of numerical values can be displayed at the same time on the display; and
in a case of determining that the plurality of numerical values cannot be displayed at the same time on the display, displaying on the display the plurality of numerical values in such a manner as to be able to switch between each numerical value.

12. The display control method according to claim 11, further comprising, in a case of determining that the plurality of numerical values can be displayed at the same time on the display, displaying the plurality of numerical values at the same time on the display.

13. A display control program executable by at least one processor of an electronic apparatus comprising a display, the display control program causing the at least one processor to:
display a calculation result of an executed calculation; and
in a case where a calculation result includes a plurality of numerical values that are related to each other, display on the display the plurality of numerical values in such a manner as to be able to switch between each numerical value.

14. The display control program according to claim 13, further causing the at least one processor to:
display a calculation result of an executed calculation;
determine whether or not the plurality of numerical values can be displayed at the same time on the display; and
in a case of determining that the plurality of numerical values cannot be displayed at the same time on the display, display on the display the plurality of numerical values in such a manner as to be able to switch between each numerical value.

15. The display control program according to claim 14, further causing the at least one processor to, in a case of determining that the plurality of numerical values can be displayed at the same time on the display, display the plurality of numerical values at the same time on the display.
